# EUROPÄISCHE PATENTSCHRIFT

(11) **EP 3 818 275 B1**
(45) Veröffentlichungstag und Bekanntmachung des Hinweises auf die Patenterteilung: **28.09.2022**
(21) Anmeldenummer: 18750101.0
(22) Anmeldetag: 05.07.2018
(51) Int. Cl.: F16D 3/223, F16D 3/2237

(54) **GLEICHLAUFGELENK**
CONSTANT VELOCITY JOINT
JOINT HOMOCINÉTIQUE

(43) Veröffentlichungstag der Anmeldung: 12.05.2021
(73) Patentinhaber: GKN Driveline International GmbH, 53797 Lohmar (DE)
(72) Erfinder: BENNER, Ida, 53842 Troisdorf (DE); CREMERIUS, Rolf, 53757 Sankt Augustin (DE); GREMMELMAIER, Anna, 53757 Sankt Augustin (DE); HILDEBRANDT, Wolfgang, 53721 Siegburg (DE); MAUCHER, Stephan, 53721 Siegburg (DE); POST, Hans-Jürgen, 53117 Bonn (DE); WECKERLING, Thomas, 53757 Sankt Augustin (DE)
(74) Vertreter: Neumann Müller Oberwalleney Patentanwälte PartG mbB
(86) Internationale Anmeldenummer: PCT/EP2018/068265
(87) Internationale Veröffentlichungsnummer: WO 2020/007476

(56) Entgegenhaltungen:
- EP-A1- 2 778 454
- WO-A1-2014/154838
- DE-A1-102012 102 678

## Beschreibung

Die Erfindung betrifft ein Gleichlaufgelenk zur Drehmomentübertragung, mit einem Gelenkaußenteil mit äußeren Kugelbahnen, einem Gelenkinnenteil mit inneren Kugelbahnen, drehmomentübertragenden Kugeln, die in Paaren von äußeren und inneren Kugelbahnen geführt werden, und einem Kugelkäfig, der die Kugeln in umfangsverteilten Fenstern aufnimmt und in einer gemeinsamen Ebene hält. Gleichlaufgelenke ermöglichen eine Drehmomentübertragung zwischen Gelenkaußenteil und Gelenkinnenteil unter Winkelbewegung.

Grundsätzlich werden Gleichlaufgelenke in Form von Festgelenken und Verschiebegelenke unterschieden. Bei Gleichlauffestgelenken sind im Wesentlichen nur eine Winkelbeweglichkeit zwischen Gelenkaußenteil und Gelenkinnenteil vorgesehen, das heißt abgesehen von üblichen Toleranzen keine axialen Bewegungen. Gleichlaufverschiebegelenke ermöglichen neben Winkelbewegungen demgegenüber auch axiale Verschiebebewegungen zwischen Gelenkaußenteil und Gelenkinnenteil.

Aus der DE 10 2012 102 678 A1 ist ein Gleichlaufgelenk in Form eines Festgelenks bekannt. In jeder Winkelstellung des Gleichlaufgelenks ist ein Maulöffnungswinkel zwischen einer äußeren Tangente und einer inneren Tangente an eine Kugel eingeschlossen. Die Bahnpaare sind derart gestaltet, dass innerhalb eines kleinen Beugewinkelbereichs bei zumindest einem Gelenkbeugewinkel ein Maulöffnungswinkel Null beträgt und innerhalb eines größeren Beugewinkelbereichs, ein öffnungsseitiger Maulöffnungswinkel einer sich zur Öffnungsseite des Gelenkaußenteils bewegenden Kugel und ein anschlussseitiger Maulöffnungswinkel einer sich bei demselben Gelenkbeugewinkel zur Anschlussseite des Gelenkaußenteils bewegenden Kugel ungleich Null sind und sich in dieselbe axiale Richtung öffnen.

Aus der WO 2014/154838 A1 ist ein Gegenbahngelenk bekannt, bei dem die ersten und zweiten Bahnpaare so gestaltet sind, dass bei zumindest einem Beugewinkel innerhalb eines kleinen Beugewinkelbereichs von bis zu 2° erste äußere und innere Tangenten an die jeweilige Kugelbahn parallel zueinander verlaufen, und bei zumindest einem Beugewinkel innerhalb eines größeren Beugewinkelbereichs ein öffnungsseitiger erster Maulöffnungswinkel einer sich zur Öffnung bewegenden Kugel und ein anschlussseitiger erster Maulöffnungswinkel einer sich bei demselben Beugewinkel zur Anschlussseite bewegenden Kugel ungleich Null sind.

Aus der EP 2 778 454 A1 ist Gleichlauffestgelenk bekannt, bei dem die Kugelbahnen jeweils einen bogenförmigen ersten Kugelbahnabschnitt und einen von einer Bogenform abweichenden zweiten Kugelbahnabschnitt aufweisen.

Aus der EP 0 802 341 A1 ist ein Gleichlaufgelenk in Form eines Festgelenks mit acht drehmomentübertragenden Kugeln bekannt. Die aus jeweils einer äußeren Kugelbahn und einer inneren Kugelbahn bestehenden Bahnpaare öffnen sich zur Öffnungsseite des Gelenks. In einer Ausführungsform haben die Kugelbahnen einen einheitlichen Radius über der Länge. In einer anderen Ausführungsform setzen sich die Kugelbahnen aus einem Radius und einer daran anschließenden Gerade zusammen; derartige Gleichlaufgelenke werden auch als hinterschnittfreie Gelenke (UF-Gelenke) bezeichnet.

Aus der US 8 267 802 B2 ist ein Gleichlauffestgelenk bekannt, bei dem die Mittelpunkte der äußeren und inneren Kugelbahnen gegenüber einem Sphärenflächenmittelpunkt versetzt sind. Das Verhältnis eines Axialversatzes (F) relativ zum Rollkreisradius (PCR) liegt zwischen 0,045 und 0,065. Es ist ferner ein Gleichlauffestgelenk mit gekrümmtem Bahnabschnitt und geradem Bahnabschnitt bekannt, die in der Gelenkmittelebene ineinander übergehen. Weiter ist ein Gleichlauffestgelenk mit einheitlich gekrümmtem Bahnabschnitt über der gesamten Bahnlänge bekannt.

Bei der Konstruktion von Gleichlaufgelenken sind diverse, sich zum Teil widersprechende Anforderungen zu erfüllen. So ist es ein wichtiges Ziel, dass Reaktionskräfte der im Betrieb zusammenwirkenden Gelenkbauteile möglichst gering sind, um Verlustleistungen zu minimieren beziehungsweise den Wirkungsgrad des Gelenks zu maximieren. Gleichzeitig soll das Gleichlaufgelenk in allen bei Betrieb auftretenden Winkelpositionen zuverlässig und möglichst verschleißfrei arbeiten.

Je nach Ausgestaltung der Bahnkrümmung ergibt sich ein größerer oder kleinerer Maulöffnungswinkel des Gleichlaufgelenks. Ein Bahnverlauf mit geringer Krümmung beziehungsweise kleinem Krümmungsradius im Gelenkinnenteil führt dazu, dass die Kugeln bei größeren Beugewinkeln weit aus der Kugelbahn austreten. Ein Bahnverlauf mit großer Krümmung beziehungsweise großem Krümmungsradius im Gelenkinnenteil führt zu einem relativ geringen Anstieg des Maulöffnungswinkels bei Beugung des Gelenks, was für die Steuerung des Kugelkäfigs nachteilig sein kann.

Der vorliegenden Erfindung liegt daher die Aufgabe zugrunde, ein Gleichlaufgelenk vorzuschlagen, das eine zuverlässige Käfigsteuerung auch bei kleinen Beugewinkeln ermöglicht und das eine hinreichende Drehmomentübertragungskapazität am Gelenkinnenteil bei größeren Beugewinkeln aufweist.

Zur Lösung wird ein Gleichlaufgelenk vorgeschlagen, umfassend: ein Gelenkaußenteil mit einer Längsachse und äußeren Kugelbahnen, wobei das Gelenkaußenteil eine Anschlussseite und eine Öffnungsseite hat; ein Gelenkinnenteil mit einer Längsachse und inneren Kugelbahnen, wobei jeweils eine äußere Kugelbahn und eine innere Kugelbahn ein Bahnpaar miteinander bilden; jeweils eine drehmomentübertragende Kugel in jedem Bahnpaar; einen Kugelkäfig, der zwischen dem Gelenkaußenteil und dem Gelenkinnenteil angeordnet ist und umfangsverteilte Käfigfenster aufweist, die jeweils zumindest eine der drehmomentübertragenden Kugeln aufnehmen; wobei die Kugeln vom Kugelkäfig bei koaxial ausgerichteten Längsachsen des Gelenkinnenteils und des Gelenkaußenteils eine Gelenkmittelebene (EM) definieren, wobei die beiden Längsachsen (L12, L13) bei von null Grad abweichenden Beugewinkeln (ß) eine Gelenkbeugeebene (EB) aufspannen; wobei, in der Gelenkbeugeebene (EB) betrachtet, in jeder Winkelstellung des Gleichlaufgelenks ein Maulöffnungswinkel (δ) gebildet ist zwischen einer äußeren Tangente (T), die in einem äußeren Kontaktpunkt zwischen äußerer Kugelbahn und Kugel an die äußere Kugelbahn angelegt ist, und einer inneren Tangente (T'), die in einem inneren Kontaktpunkt zwischen innerer Kugelbahn und Kugel an die innere Kugelbahn angelegt ist; wobei die Mittelpunkte der Kugeln beim Bewegen entlang der äußeren und inneren Kugelbahnen jeweils eine Mittelpunktslinie (A, A') definieren; wobei ferner ein erster Beugewinkelbereich definiert ist, der Beugewinkel (β) kleiner als zwanzig Grad umfasst (-20° < β < 20°); und wobei ein zweiter Beugewinkelbereich definiert ist, der Beugewinkel (β) größer zwanzig Grad umfasst (β > ± 20°); wobei zumindest einige der Bahnpaare derart gestaltet sind, dass der anschlussseitige Maulöffnungswinkel (δ) einer sich in der Gelenkbeugeebene (EB) zur Anschlussseite des Gelenkaußenteils bewegenden Kugel innerhalb des ersten Beugewinkelbereichs mit zunehmendem Beugewinkel (β) zunimmt, wobei ein anschlussseitiger erster mittlerer Maulöffnungswinkelanstieg (S1) des anschlussseitigen Maulöffnungswinkels (δ) über dem Beugewinkel (β) innerhalb des ersten Beugewinkelbereichs größer ist, als ein anschlussseitiger zweiter mittlerer Maulöffnungswinkelanstieg (S2) des Maulöffnungswinkels (δ) über dem Beugewinkel (β) innerhalb des zweiten Beugewinkelbereichs.

Ein Vorteil des Gleichlaufgelenks ist, dass aufgrund des steigendenden Maulöffnungswinkels innerhalb des zentralen Beugewinkelbereichs von bis zu zwanzig Grad um die Gelenkmittelebene eine zuverlässige Käfigsteuerung des Kugelkäfigs gewährleistet ist, insbesondere auch durch die Kugeln, welche von der Mittelebene zur Anschlussseite wandern. Dabei führt ein verhältnismäßig großer Bahnradius im zentralen Beugewinkelbereich zu einem geringen Anstieg des Maulöffnungswinkels über dem Beugewinkel. Dadurch, dass der Anstieg des Maulöffnungswinkels bei größeren Beugewinkeln von mehr als zwanzig Grad jedoch wieder abnimmt und insbesondere kleiner ist, als im zentralen Beugewinkelbereich, bleiben die Kugeln auch bei diesen großen Beugewinkeln im Gelenkinnenteil zuverlässig geführt und treten nur geringfügig axial aus den Kugelbahnen des Gelenkinnenteils heraus.

Die Maulöffnungswinkel sind zwischen einer äußeren Tangente an die äußere Kugelbahn und einer inneren Tangente an die innere Kugelbahn, jeweils im Kontaktbereich mit der in der äußeren und inneren Kugelbahn geführten Kugel definiert. Dabei bezieht sich der Maulöffnungswinkel auf die Gelenkbeugeebene, welche von den Längsachsen des Gelenkaußenteils und Gelenkinnenteils aufgespannt wird, bzw. auf ein in der Gelenkbeugeebene liegendes Bahnpaar mit darin aufgenommener Kugel. Der Kontaktbereich zwischen Kugel und Kugelbahn kann dabei unmittelbar in der Gelenkbeugeebene liegen, beispielsweise bei kreisförmigem Bahnquerschnitt, dessen Querschnittsradius dem Radius der Kugel entspricht, oder in zur Gelenkbeugeebene parallel versetzten Ebenen, welche durch die Kugelkontaktlinien zwischen Kugel und Kugelbahnen aufgespannt werden, beispielsweise bei einem von der Kreisform abweichenden Querschnitt der Kugelbahnen. In letzterem Fall werden die Projektionen der an die jeweilige Kugelbahn angelegten Tangenten in der Gelenkbeugeebene betrachtet, welche den Maulöffnungswinkel einschließen.

Von dem Gleichlaufgelenk haben zumindest einige der Bahnpaare, die sich jeweils aus einer äußeren und inneren Kugelbahn zusammensetzen, die erfindungsgemäße Form mit bei größeren Beugewinkeln geringeren Steigerungsraten des Maulöffnungswinkels. Die Anzahl der Kugeln bzw. Bahnpaare des Gleichlaufgelenks kann beliebig entsprechend den technischen Anforderungen an das Gelenk ausgewählt werden und beispielsweise sechs, sieben oder acht betragen. Sofern im Rahmen der vorliegenden Offenbarung von einem Bahnpaar oder zumindest einigen der Bahnpaare die Rede ist, kann sich das jeweils beschriebene Merkmal entsprechend auf zwei, mehr als zwei, den größten Teil oder alle Bahnpaare des Gelenks beziehen.

Als Steigerungsrate S des Maulöffnungswinkels, auch als Maulöffnungswinkelanstieg oder -rate bezeichnet, ist die Änderung des Maulöffnungswinkels über der Abwinklung des Gelenks gemeint (S = Δδ/Δβ). Dabei ist vorgesehen, dass die mittlere Maulöffnungswinkelrate S1 des zentralen ersten Bahnabschnitts für die von der Gelenkmittelebene in Richtung Anschlussseite laufenden Kugel größer ist, als die mittlere Maulöffnungswinkelrate S2 des daran anschließenden zweiten Bahnabschnitts. Nach einer Ausführungsform kann das zumindest eine Bahnpaar im anschlussseitigen Abschnitt des Gelenkaußenteils, beziehungsweise im zugehörigen öffnungsseitigen Abschnitt des Gelenkinnenteils so gestaltet sein, dass der anschlussseitige erste mittlere Maulöffnungswinkelanstieg (S1) größer als 0,5 ist. Alternativ oder ergänzend kann die Bahnform so gestaltet sein, dass der anschlussseitige zweite mittlere Maulöffnungswinkelanstieg (S2) kleiner als 0,5 ist. Der erste Maulöffnungswinkelanstieg (S1) des Maulöffnungswinkels (δ) über dem Beugewinkel (β) innerhalb des ersten Beugewinkelbereichs kann konstant oder variabel sein. Alternativ oder ergänzend können die zumindest einigen Bahnpaare so gestaltet sein, dass der zweite Maulöffnungswinkelanstieg (S2) des Maulöffnungswinkels (δ) über dem Beugewinkel (β) innerhalb des zweiten Beugewinkelbereichs variabel ist. Es ist jedoch auch möglich, dass der Maulöffnungswinkelanstieg (S2) des zweiten Beugewinkelbereichs konstant ist. Es ist insbesondere vorgesehen, dass zumindest ein Maulöffnungswinkel (δ) innerhalb des zweiten Beugewinkelbereichs größer ist als ein größter Maulöffnungswinkel des zentralen Beugewinkelbereichs.

Das zumindest eine Bahnpaar ist vorzugsweise so gestaltet, dass der Maulöffnungswinkel (δ) bei gestrecktem Gelenk (β = 0°) größer oder gleich null Grad ist (δ ≥ 0°) und/oder kleiner als acht Grad (δ < 8°), insbesondere kleiner als 4 Grad ist (δ < 4°), vorzugsweise kleiner als 2 Grad ist (δ < 2°),. Durch einen verhältnismäßig kleinen Maulöffnungswinkel bei gestrecktem Gelenk sind die zwischen den Kugelbahnen und den Kugeln entlang der Kugelbahnen wirksamen Axialkräfte gering. Insgesamt treten somit nur geringe Reaktionskräfte zwischen den in Kontakt stehenden Gelenkteilen auf, so dass Reibungsverluste entsprechend gering sind.

Ausgehend von der gestreckten Lage des Gelenks bzw. der Gelenkmittelebene nimmt der Maulöffnungswinkel mit zunehmender Abwinkelung des Gelenks im ersten Beugewinkelbereich (β = 0° ± 20°) im Wesentlichen zu. Dabei kann das zumindest eine Bahnpaar so gestaltet sein, dass der Maulöffnungswinkel (δ) innerhalb des ersten Beugewinkelbereichs um mindestens fünf Grad zunimmt, insbesondere mindestens zehn Grad. An den zentralen ersten Beugewinkelbereich schließt der zweite Beugewinkelbereich an. Der zweite Beugewinkelbereich umfasst Beugewinkel (β), die betragsmäßig größer sind als 20°, das heißt, die kleiner sind als minus 20° oder größer sind als plus 20° (β > ± 20°). Der zweite Beugewinkelbereich kann Beugewinkel von beispielsweise bis zu 40°, insbesondere bis zu 50°, insbesondere bis zum maximalen Beugewinkel umfassen, ohne hierauf eingeschränkt zu sein.

Bei gestrecktem Gelenk liegen die Mittelpunkte der drehmomentübertragenden Kugeln in der Gelenkmittelebene bzw. definieren diese. Dabei wird der Durchmesser, auf dem die Mittelpunkte der Kugeln bei gestrecktem Gelenk liegen, als Rollkreisdurchmesser (PCD) bezeichnet. Entsprechend definiert der Rollkreisradius (PCR) den Radius um den Gelenkmittelpunkt, auf dem die Mittelpunkte der Kugeln bei gestrecktem Gelenk liegen.

Bei Rotation des Gleichlaufgelenks unter Abwicklung wandern die drehmomentübertragenden Kugeln entlang der Kugelbahnen. Dabei wird, in der Gelenkbeugeebene betrachtet, die sich zur Öffnungsseite des Gelenkaußenteils bewegende Kugel in einen öffnungsseitigen Bahnabschnitt des Gelenkaußenteils und in einen anschlussseitigen Bahnabschnitt des Gelenkinnenteils geführt. Die sich, in der Gelenkbeugeebene betrachtet, zur Anschlussseite des Gelenkaußenteils bewegende Kugel wird in einen anschlussseitigen Bahnabschnitt des Gelenkaußenteils und in einen öffnungsseitigen Bahnabschnitt des Gelenkinnenteils geführt.

Die Kugelbahnen des Gelenkaußenteils haben in Bezug auf die Gelenkmittelebene über ihre Länge jeweils einen öffnungsseitigen Bahnabschnitt und einen anschlussseitigen Bahnabschnitt. Der ausgehend von der Gelenkmittelebene öffnungsseitig anschließende Bahnabschnitt des Gelenkinnenteils entspricht im Wesentlichen dem anschlussseitigen Bahnabschnitt des Gelenkaußenteils. Das heißt, dass der öffnungsseitige Bahnabschnitt des Gelenkinnenteils so gestaltet ist, dass die zugehörige Mittelpunktsbahn dieses Bahnabschnitts spiegelsymmetrisch zur Mittelpunktsbahn des anschlussseitigen Bahnabschnitts des Gelenkaußenteils in Bezug auf eine winkelhalbierende Ebene ist. Dies gilt für jedes der Bahnpaare.

Nach einer Ausführungsform können die zumindest mehreren Bahnpaare im zentralen Beugewinkelbereich so gestaltet sein, dass für jeden Beugewinkel (β) innerhalb des ersten Beugewinkelbereichs gilt, dass ein öffnungsseitiger Maulöffnungswinkel (δo) einer sich in der Gelenkbeugeebene (EB) zur Öffnungsseite des Gelenkaußenteils bewegenden Kugel und ein anschlussseitiger Maulöffnungswinkel (δa) einer sich bei demselben Beugewinkel (β) in der Gelenkbeugeebene (EB) zur Anschlussseite des Gelenkaußenteils bewegenden Kugel sich in dieselbe axiale Richtung öffnen. Mit in dieselbe axiale Richtung weisenden Maulöffnungswinkeln ist gemeint, dass die in der Gelenkbeugeebene auf eine in Richtung Anschlussseite wandernde Kugel von den äußeren und inneren Kugelbahnen einwirkenden resultierende Kraft eine Axialkraftkomponente aufweist, die in dieselbe axiale Richtung weist, wie die resultierende Axialkraftkomponente, die auf eine in Richtung Öffnungsseite wandernde Kugel einwirkt. Durch diese Ausgestaltung wird erreicht, dass der Kugelkäfig zumindest näherungsweise auf die winkelhalbierende Ebene gesteuert wird. Falls vorhanden, weisen auch die übrigen Bahnpaare Maulöffnungen auf, die vorzugsweise in dieselbe axiale Richtung weisen, wie die Maulöffnungen der erfindungsgemäßen Bahnpaare. Vorzugsweise sind alle Bahnpaare so gestaltet, dass sich die Maulöffnungswinkel δ aller Kugeln bei Abwinklung des Gelenks, jeweils in der Gelenkbeugeebene betrachtet, sich in dieselbe axiale Richtung öffnen. Dies kann auch für den an den zentralen Beugewinkelbereich anschließenden zweiten Beugewinkelbereich gelten. Weiter ist für eine günstige Fertigung vorzugsweise vorgesehen, dass alle äußeren Kugelbahnen untereinander gleich und alle inneren Kugelbahnen untereinander gleich gestaltet sind.

Die Mittelpunkte der Kugeln definieren beim Bewegen entlang der äußeren und inneren Kugelbahnen, in der Gelenkbeugeebene betrachtet, eine Mittelpunktslinie (A, A'). Dabei ist nach einer bevorzugten Ausgestaltung vorgesehen, dass die Mittelpunktslinie (A, A') über ihre Länge zumindest zwei Bahnabschnitte mit unterschiedlicher Krümmung aufweist. Die zumindest zwei Bahnabschnitte mit unterschiedlicher Krümmung können innerhalb des öffnungsseitigen Abschnitts und/oder innerhalb des anschlussseitigen Abschnitts und/oder teilweise innerhalb des öffnungsseitigen und des anschlussseitigen Abschnitts der äußeren und inneren Kugelbahnen liegen.

Nach einer bevorzugten Ausgestaltung weisen die anschlussseitigen Bahnabschnitte der Kugelbahnen des Gelenkaußenteils - und dementsprechend auch die öffnungsseitigen Bahnabschnitte des Gelenkinnenteils - jeweils zumindest zwei Teilabschnitte mit unterschiedlicher Krümmung auf, die auch als Segmente bezeichnet werden können.

Ein erstes Segment der anschlussseitigen Bahnabschnitte des Gelenkaußenteils kann einen ersten Krümmungsradius (Ra1) aufweisen, der insbesondere so gestaltet ist, dass das Verhältnis des Rollkreisradius (PCR) zum ersten Krümmungsradius (Ra1) des anschlussseitigen Bahnabschnitts größer als 1,4 ist. Der erste Krümmungsradius des ersten Segments kann beispielsweise durch einen ersten Kreisbogenabschnitt um einen ersten Segment-Mittelpunkt (Ma1) gebildet sein, wobei der erste Segment-Mittelpunkt (Ma1) von der Längsachse einen radialen Abstand (Offset) in Richtung Kugelbahn aufweist. Der erste Kreisbogenabschnitt erstreckt sich vorzugsweise über einen ersten Bahnsegmentwinkel (γ1) von 14° bis 22° (14° < γ1 < 22°) um den ersten Segment-Mittelpunkt (Ma1). Der erste Segment-Mittelpunkt (Ma1) kann in der Gelenkmittelebene (EM) liegen, oder von dieser axial versetzt sein.

Ein zweites Teilsegment der anschlussseitigen Bahnabschnitte des Gelenkaußenteils kann einen zweiten Krümmungsradius (Ra2) aufweisen, der insbesondere so gestaltet ist, dass das Verhältnis des Rollkreisradius (PCR) zum zweiten Krümmungsradius (Ra2) des anschlussseitigen Bahnabschnitts (22a) kleiner als 1,4 ist. Der zweite Krümmungsradius (Ra2) des zweiten Segments kann durch einen zweiten Kreisbogenabschnitt um einen zweiten Segment-Mittelpunkt (M2a) gebildet sein, wobei der zweite Segment-Mittelpunkt (M2a) insbesondere einen axialen Abstand (Offset) von der Gelenkmittelebene in Richtung Öffnungsseite aufweist. Der zweite Kreisbogenabschnitt erstreckt sich vorzugsweise über einen zweiten Bahnsegmentwinkel von 12° bis 20° (12° < γ2 < 20°) um den zweiten Segment-Mittelpunkt (Ma2). Wie oben bereits erwähnt, sind die Kugelbahnen des Gelenkinnenteils entsprechend gegengleich gestaltet.

Nach einer bevorzugten Ausgestaltung hat der Kugelkäfig eine sphärische Außenfläche zum Führen des Kugelkäfigs gegenüber einer inneren Fläche des Gelenkaußenteils und eine sphärische Innenfläche zum Führen des Kugelkäfigs gegenüber einer äußeren Fläche des Gelenkinnenteils. Zwischen einem Mittelpunkt der sphärischen Außenfläche und einem Mittelpunkt der sphärischen Innenfläche kann ein axialer Versatz (Offset) vorgesehen sein. Durch diese Maßnahme wird eine gute Käfigsteuerung bei Winkelbewegung des Gleichlaufgelenks erreicht. Es ist jedoch auch möglich, dass die Mittelpunkte der sphärischen Innenfläche und Außenfläche in einer Ebene liegen. Zwischen der äußeren sphärischen Außenfläche des Kugelkäfigs und der inneren sphärischen Fläche des Gelenkaußenteils und/oder zwischen der sphärischen Innenfläche des Kugelkäfigs und der sphärischen äußeren Fläche des Gelenkinnenteils ist vorzugsweise ein Radialspiel vorgesehen.

Nach einer bevorzugten Ausgestaltung ist ein Schmiermittel zum Schmieren des Gleichlaufgelenks vorgesehen, das einen Reibwert (µ) zwischen 0,02 und 0,09 (0,02 < µ < 0,09), insbesondere zwischen 0,05 und 0,06 (0,05 < µ < 0,06), aufweist.

Ferner kann für die zumindest einigen Bahnpaare nach einer möglichen Ausgestaltung zumindest eines von Folgendem gelten: das Verhältnis zwischen Rollkreisradius (PCR) und Kugeldurchmesser (DB) beträgt zwischen 1,4 und 2,1; das Verhältnis zwischen Rollkreisradius (PCR) und axialem Versatz (Offset) des Kugelkäfigs beträgt zwischen 5,0 und 12,5; das Verhältnis zwischen Rollkreisradius (PCR) und axialem Versatz (Offset) des zweiten Bahnsegment-Mittelpunkts (Ma2) beträgt zwischen 4,0 und 8,0; das Verhältnis zwischen Rollkreisradius (PCR) und Durchmesser eines Anschlussprofils des Gelenkinnenteils beträgt zwischen 1,0 und 1,25; und/oder das Verhältnis zwischen Rollkreisradius (PCR) und Außendurchmesser des Gelenkaußenteils beträgt zwischen 0,315 und 0,345. Bei Ausgestaltung des Gelenks gemäß einem oder mehrerer dieser Bereiche wird eine besonders kompakte Bauform erreicht.

Zwischen den gegeneinander beweglichen Teilen des Gleichlaufgelenks ist üblicherweise Spiel vorgesehen. Dabei kann das Gelenk beispielsweise ein oder mehrere der folgenden Dimensionen aufweisen, ohne hierauf eingeschränkt zu sein: das Radialspiel zwischen Käfig und Kugelnabe (ORC) kann beispielsweise zwischen 0,01 mm und 0,08 mm betragen; das Radialspiel zwischen Käfig und Gelenkaußenteil (IRC) kann beispielsweise zwischen 0,01 mm und 0,08 mm betragen; das Radialspiel zwischen den Kugeln und der jeweiligen Kugelbahn (SKR) kann beispielsweise zwischen 0 mm und 0,05 mm betragen; und/oder das Spiel zwischen Kugel und Käfigfenster (SKF) des Kugelkäfigs kann beispielsweise zwischen - 0,03 mm und 0,03 mm liegen.

Im Einbauzustand des Gleichlaufgelenks kann ein Faltenbalg zum Abdichten des Gelenkraums vorgesehen sein. Der Faltenbalg kann mit Vorspannung montiert sein, so dass durch den Faltenbalg eine Axialkraft erzeugt wird, die das Gelenkinnenteil und das Gelenkaußenteil voneinander weg beaufschlagt. Der Faltenbalg bewirkt im vorgespannten Zustand eine Axialkraftkomponente die ein zwischen den genannten Bauteilen vorhandenes Spiel herausdrückt. Eine plötzliche Laständerung, beispielsweise vom drehmomentfreien Zustand auf ein hohes Drehmoment, führt nicht zu einem Anschlag des Käfigs gegenüber dem Innenteil bzw. Außenteil, so dass ungewünschte Geräusche vermieden werden. Die Vorspannkraft kann beispielsweise in einer Größenordnung von 30 N bis 150 N liegen.

Als Bahnwinkel β/2 wird im Rahmen der vorliegenden Offenbarung der Winkel verstanden, den ein Radius um den Gelenkmittelpunkt M an die Kugelmitte einer der drehmomentübertragenden Kugel mit der Gelenkmittelebene EM einschließt. Dabei beträgt der Bahnwinkel β/2 in jeder Winkelstellung des Gelenks üblicherweise die Hälfe des Gelenkbeugewinkels β, das heißt der Bahnwinkel ß/2 von beispielsweise bis zu 10° entspricht einem Gelenkbeugewinkel von 20°.

Das Gleichlaufgelenk ist aufgrund der Führung des Kugelkäfigs gegenüber der sphärischen Innenfläche des Gelenkaußenteils bzw. der sphärischen Außenfläche des Gelenkinnenteil in Form eines Festgelenks gestaltet, das Verschiebebewegungen nur im Rahmen des Axialspiels zwischen Gelenkaußenteil und -innenteil zulässt. Es ist jedoch auch denkbar, den Käfig gegenüber der Innenfläche des Gelenkaußenteils und gegenüber der Außenfläche des Gelenkinnenteils axial freizustellen, so dass das Gelenk dann als Verschiebegelenk gestaltet wäre.

Bevorzugte Ausführungsbeispiele werden nachstehend anhand der Zeichnungsfiguren erläutert. Hierin zeigt:
- Figur 1A): ein erfindungsgemäßes Gleichlaufgelenk in gestreckter Lage im Längsschnitt;
- Figur 1B): ein Detail des Gelenks aus Figur 1A) in vergrößerter Darstellung;
- Figur 1C): den Kugelkäfig des Gelenks aus Figur 1A) als Einzelheit;
- Figur 1D): das Gelenkaußenteil des Gelenks aus Figur 1A) im Längsschnitt;
- Figur 1E): das Gelenkinnenteil des Gelenks aus Figur 1A) im Längsschnitt;
- Figur 1F): das Gelenkaußenteil des Gelenks aus Figur 1A) im Längsschnitt mit weiteren eingezeichneten Einzelheiten;
- Figur 1G): das Gelenkinnenteil des Gelenks aus Figur 1A) im Längsschnitt mit weiteren eingezeichneten Einzelheiten;
- Figur 2A): das Gelenk aus Figur 1A) in gestreckter Lage, das heißt bei einem Beugewinkel von 0°;
- Figur 2B): das Gelenk aus Figur 1A) bei Abwinklung um einen Beugewinkel von 20°;
- Figur 2C): das Gelenk aus Figur 1A) bei Abwinklung um einen Beugewinkel von 40°;
- Figur 3): ein Diagramm mit einer Darstellung des Maulöffnungswinkels δ (in Winkelgrad) über dem Beugewinkel ß (in Winkelgrad).

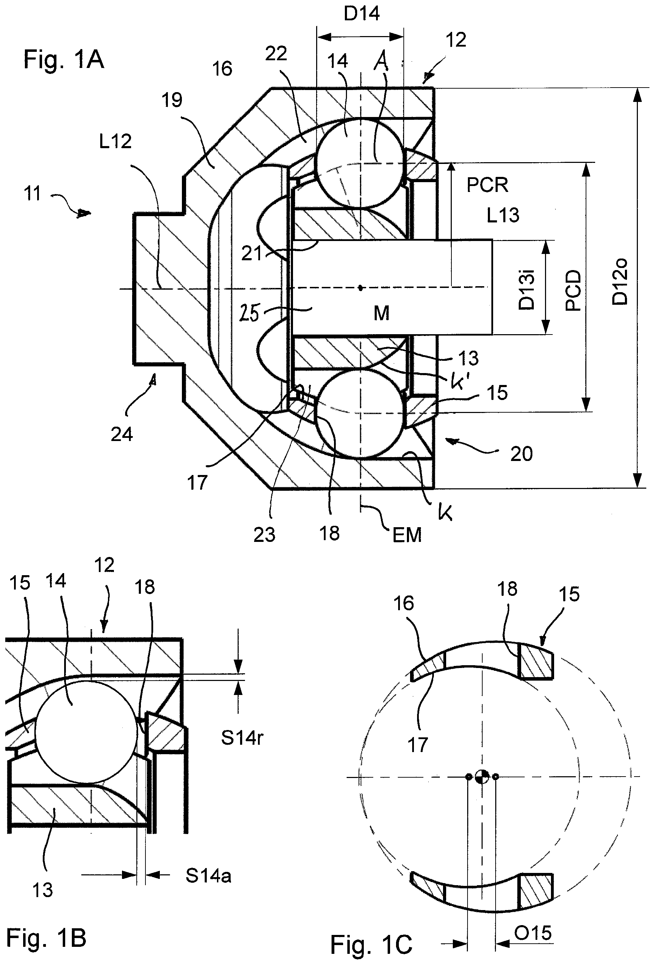

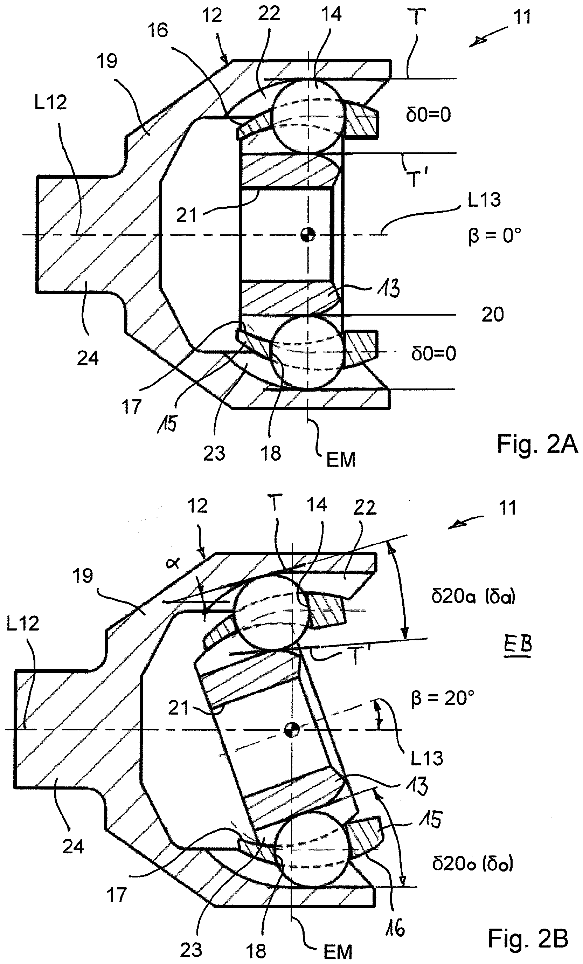

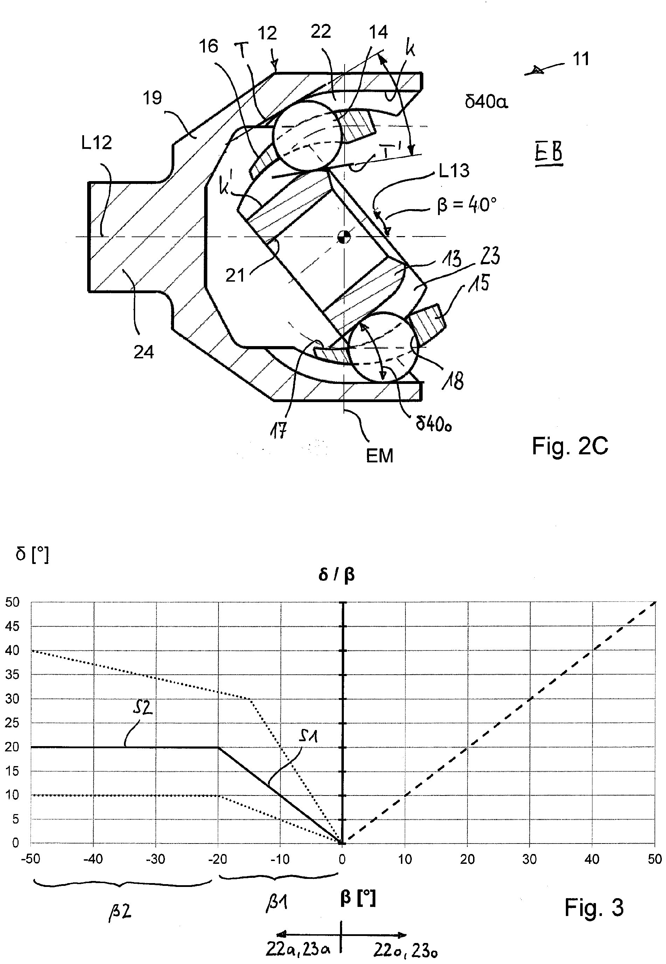

Die Figuren 1A) bis 1G), Figuren 2A) bis 2C) und Figur 3 werden nachstehend gemeinsam beschrieben. Es ist ein erfindungsgemäßes Gleichlaufdrehgelenk 11 gezeigt. Das Gleichlaufgelenk 11 umfasst ein Gelenkaußenteil 12, ein Gelenkinnenteil 13, drehmomentübertragende Kugeln 14, sowie einen Kugelkäfig 15. Der Kugelkäfig 15 hat eine sphärische Außenfläche 16, die im Gelenkaußenteil 12 geführt ist und eine sphärische Käfiginnenfläche 17, die auf dem Gelenkinnenteil 13 geführt ist. Die Kugeln 14 sind in umfangsverteilten Käfigfenstern 18 im Kugelkäfig 15 in der Gelenkmittelebene EM gehalten. Am Gelenkaußenteil 12 ist eine Längsachse L12 bezeichnet, am Gelenkinnenteil 13 eine Längsachse L13. Der Schnittpunkt der Längsachsen L12, L13 mit der Gelenkmittelebene EM bildet den Gelenkmittelpunkt M.

Das Gelenkaußenteil 12 weist einen Boden 19 auf, mit dem ein Anschlusszapfen 24 verbunden ist, sowie eine Öffnung 20. Das Gelenkinnenteil 13 hat eine Öffnung 21, in die der Zapfen einer Antriebswelle 25 zur Übertragung eines Drehmoments drehfest eingesteckt ist. Die Lage des Bodens 19 bezeichnet in der vorliegenden Offenbarung die axiale Richtung "zur Anschlussseite", die Lage der Öffnung 20 bezeichnet die axiale Richtung "zur Öffnungsseite". Diese Begriffe werden auch in Bezug auf das Gelenkinnenteil 13 verwendet, wobei der tatsächliche Anschluss der Welle 25 an das Gelenkinnenteil 13 unberücksichtigt bleibt. Es versteht sich, dass das Gelenkaußenteil anstelle des Bodens auch zur Anschlussseite hin offen gestaltet sein kann, wie es beispielsweise bei einem Scheibengelenk der Fall ist.

Im Gelenkaußenteil 12 sind äußere Kugelbahnen 22 und im Gelenkinnenteil 13 sind innere Kugelbahnen 23 des Gleichlaufgelenks 11 gebildet. Jeweils eine äußere Kugelbahn 22 und eine innere Kugelbahn 23 liegen einander gegenüber und bilden gemeinsam ein Bahnpaar miteinander, in dem jeweils eine drehmomentübertragende Kugel 14 geführt ist. Die einander gegenüberliegenden äußeren und inneren Kugelbahnen 22, 23 können in Radialebenen um die jeweilige Längsachse L12, L13 liegen. Die Radialebenen haben jeweils den gleichen Winkelabstand voneinander. Es ist jedoch auch denkbar, dass jeweils zwei in Umfangsrichtung benachbarte Bahnpaare in zueinander parallelen Ebenen verlaufen, welche parallel zur Längsachse L12, L13 liegen. Diese Ausgestaltung wird auch als "Twin-Ball"-Gelenk bezeichnet. Bei Abwinklung des Gelenks, das heißt bei Winkelbewegungen des Gelenkinnenteils 13 relativ zum Gelenkaußenteil 12, werden die Kugeln 14 aus der Gelenkmittelebene EM heraus zumindest etwa in die winkelhalbierende Ebene zwischen der Längsachse L12 des Gelenkaußenteils 12 und der Längsachse L13 des Gelenkinnenteils 13 geführt. Mit zumindest etwa ist gemeint, dass die durch die Kugelmittelpunkte der Kugeln 14 aufgespannte Ebene innerhalb eines Winkelbereichs von ± 10 % um die winkelhalbierende Ebene liegt, und dieser insbesondere entsprechen kann.

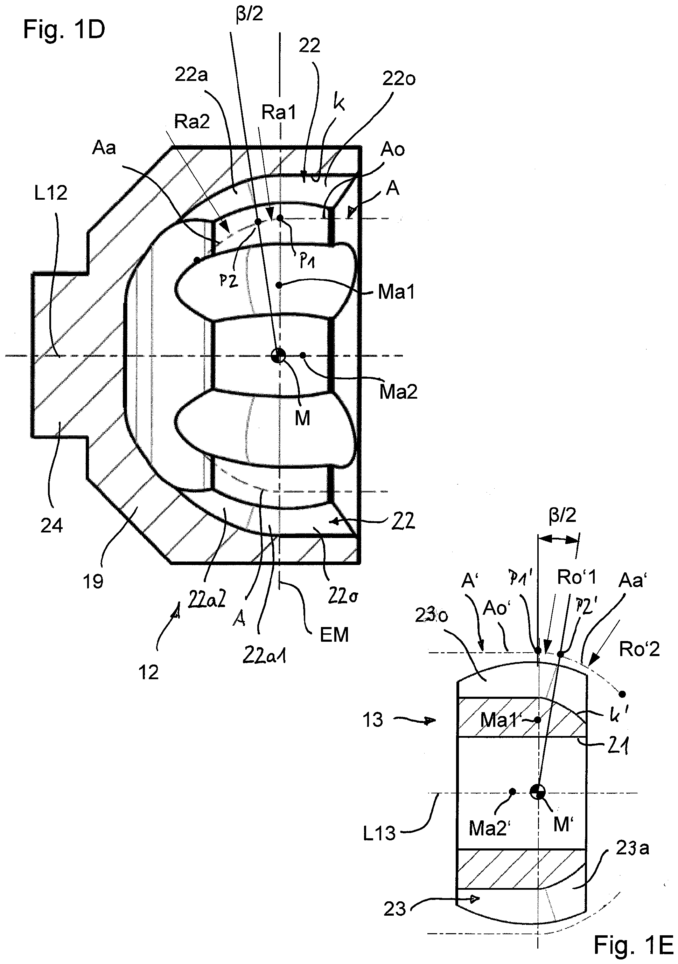

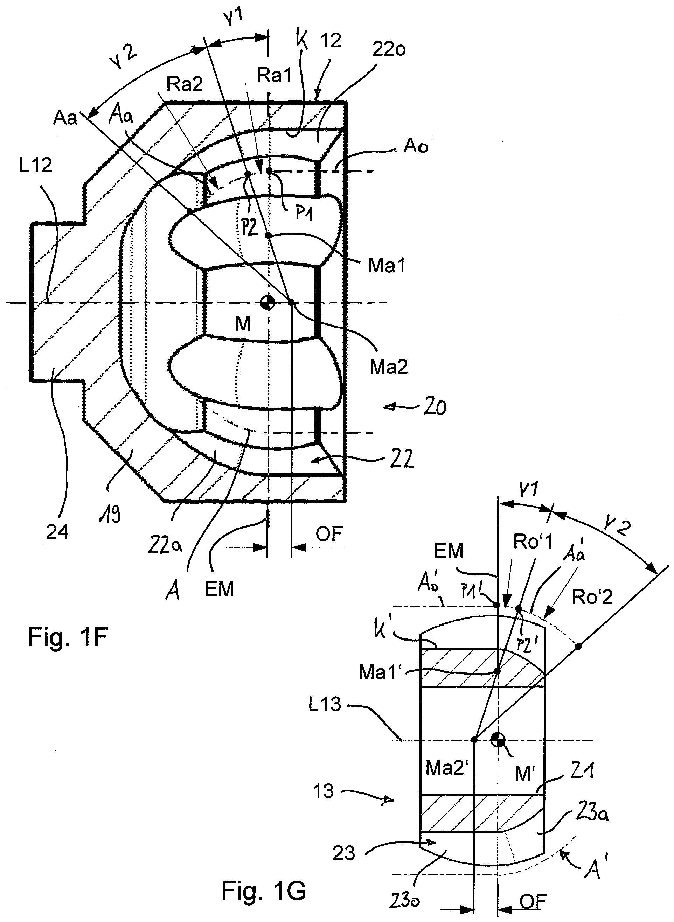

Die Form der äußeren Kugelbahnen 22, die der Form der inneren Kugelbahnen zumindest weitgehend entspricht, ist insbesondere in den Figuren 1D und 1G erkennbar. Die Kugeln 14 haben Kontakt mit den äußeren Kugelbahnen 22 im Gelenkaußenteil 12 und inneren Kugelbahnen 23 im Gelenkinnenteil 13. Dabei bilden die Kugeln 14 im Kontaktbereich mit den äußeren Kugelbahnen 22 im Längsschnitt eine äußere Kontaktlinie K und im Kontaktbereich mit den inneren Kugelbahnen 23 eine innere Kontaktlinie K'. Die Kugeln 14 sind mit Kontakt im Bahngrund der Kugelbahnen 22, 23 dargestellt, der nicht notwendig gegeben sein muss. So können die äußere und innere Kontaktlinie K, K', wie gezeigt, im Bahngrund liegen, das heißt in einer Radialebene, welche die Längsachsen L12, L13 beinhaltet, oder in zu den Längsachsen parallelen Ebenen. Beim Bewegen entlang der äußeren und inneren Kugelbahnen 22, 23 definieren die Mittelpunkte der Kugeln 14 jeweils eine Mittelpunktslinie A, A'. Die Mittelpunktslinien A, A' verlaufen parallel zur jeweiligen Kontaktlinie K, K'. Zur Beschreibung der Kugelbahnen 22, 23 kann entweder auf die Kontaktlinien K, K' im Bahngrund oder auf die Mittellinien A, A' Bezug genommen werden, die durch die Summe der Kugelmittelpunkte bei Winkelbewegungen des Gelenks definiert wird. Dabei bezeichnet die Kugelmittellinie A die Linie der Kugelmittelpunkte der Kugeln 14A entlang der äußeren Kugelbahnen 22 im Gelenkaußenteil 12, und A' die Kugelmittellinie der zugehörigen inneren Kugelbahnen 23 im Gelenkinnenteil 13.

Bei der vorliegenden Ausführungsform ist zwischen einem Mittelpunkt M16 der sphärischen Außenfläche 16 und einem Mittelpunkt M17 der sphärischen Innenfläche 17 des Kugelkäfigs 15 ein axialer Versatz (Offset) vorgesehen. Hierdurch wird eine gute Käfigsteuerung bei Winkelbewegung des Gleichlaufgelenks erreicht. Zwischen der sphärischen Innenfläche 17 des Kugelkäfigs 15 und einer sphärischen Außenfläche des Gelenkinnenteils 13 sowie zwischen der sphärischen Außenfläche 16 des Kugelkäfigs 15 und einer sphärischen Innenfläche des Gelenkaußenteils 12 ist optional jeweils Spiel vorgesehen. Ein Radialspiel zwischen dem Käfig 15 und dem Gelenkinnenteil 13 und/oder zwischen dem Käfig 15 und dem Gelenkaußenteil 12 kann beispielsweise zwischen 0,01 mm und 0,08 mm betragen. Ein Radialspiel S14r zwischen den Kugeln 14 und der jeweiligen Kugelbahn 22 kann beispielsweise zwischen 0 mm und 0,05 mm betragen. Eine axiale Passung S14a zwischen Kugel 14 und Käfigfenster 18 des Kugelkäfigs 15 kann beispielsweise zwischen - 0,03 mm und 0,03 mm liegen.

Zum Abdichten des Gelenks gegenüber äußeren Einflüssen wird üblicherweise ein Dichtelement, beispielsweise ein Faltenbalg oder Membranbalg vorgesehen. Der vom Dichtelement eingeschlossene Gelenkraum ist vorzugsweise zumindest teilweise mit einem Schmiermittel gefüllt. Das Schmiermittel kann beispielsweise einen Reibwert µ zwischen 0,02 und 0,09 aufweisen (0,02 < µ < 0,09), insbesondere zwischen 0,05 und 0,06 (0,05 < µ < 0,06).

Ferner kann das Gleichlaufgelenk 11 so gestaltet sein, dass für die zumindest einigen Bahnpaare 22, 23 ein oder mehrere der folgende Merkmale erfüllt sind: das Verhältnis zwischen Rollkreisradius PCR und Kugeldurchmesser D14 beträgt zwischen 1,4 und 2,1; das Verhältnis zwischen Rollkreisradius PCR und axialem Versatz (Offset) des Kugelkäfigs beträgt zwischen 5,0 und 12,5; das Verhältnis zwischen Rollkreisradius PCR und axialem Versatz (Offset) des zweiten Bahnsegment-Mittelpunkts Ma2 beträgt zwischen 4,0 und 8,0; das Verhältnis zwischen Rollkreisradius PCR und Durchmesser eines Anschlussprofils des Gelenkinnenteils beträgt zwischen 1,0 und 1,25; und/oder das Verhältnis zwischen Rollkreisradius PCR und Außendurchmesser des Gelenkaußenteils beträgt zwischen 0,315 und 0,345.

Im Folgenden wird näher auf die Besonderheiten des erfindungsgemäßen Gleichlaufgelenks, insbesondere auf die Ausgestaltung der Kugelbahnen 22, 23 eingegangen. Es gelten vorliegend im Zusammenhang mit dem erfindungsgemäßen Gleichlaufgelenk bzw. der Ausgestaltung der Kugelbahnen die folgenden Definitionen:
Der Gelenkbeugewinkel β definiert den Winkel, der zwischen der Längsachse L12 des Gelenkaußenteils 12 und der Längsachse L13 des Gelenkinnenteils 13 eingeschlossen wird. Der Gelenkbeugewinkel β beträgt bei gestrecktem Gelenk null.

Der Bahnwinkel β/2 definiert den Winkel, den ein Radius um den Gelenkmittelpunkt M an die Kugelmitte mit der Gelenkmittelebene EM einschließt. Dabei beträgt der Bahnwinkel β/2 in jeder Winkelstellung des Gelenks stets die Hälfe des Gelenkbeugewinkels β.

Der Maulöffnungswinkel δ definiert den Winkel, der von Tangenten T, T' an die Kugeln 14 in den Kontaktpunkten mit den ersten Kugelbahnen 22 bzw. den zweiten Kugelbahnen 23 eingeschlossen wird. Dabei ist die Systematik in der vorliegenden Offenbarung so, dass der Maulöffnungswinkel, der über den technisch möglichen Beugewinkelbereich verschiedene Größen annehmen kann, allgemein mit δ bezeichnet ist; ausgewählte konkrete Beugewinkel können mit dem jeweiligen Beugewinkel und einer Angabe über die Position der Kugel ergänzt werden (beispielsweise δ0 für den Maulöffnungswinkel bei Beugewinkel von null oder δ20o für den Maulöffnungswinkel an der öffnungsseitigen Kugel bei einem Beugewinkel von 20°).

Als Steigerungsrate S des Maulöffnungswinkels δ ist die Änderung des Maulöffnungswinkels δ über der Abwinklung β des Gelenks 11 definiert (S = Δδ/Δβ).

Die Mittelpunktsebene EM ist definiert durch die Kugelmittelpunkte der drehmomentübertragenden Kugeln 14 bei gestrecktem Gelenk.

Der Durchmesser, auf dem die Mittelpunkte der Kugeln 14 bei gestrecktem Gelenk liegen, wird als Rollkreisdurchmesser PCD bezeichnet. Entsprechend wird der Radius, auf dem die Mittelpunkte der Kugeln 15 bei gestrecktem Gelenk liegen, als Rollkreisradius PCR bezeichnet.

In Figur 1D) ist das Gelenkaußenteil 12 mit seiner Mittelpunktslinie A und Kontaktlinie K gezeigt, welche äquidistant zueinander verlaufen.

Das Gleichlaufgelenk 11 umfasst vorliegend eine Anzahl von sechs Kugeln 14 bzw. sechs Bahnpaaren 22, 23, wobei es sich versteht, dass eine andere Zahl denkbar ist. Die Mittelpunktslinie A des Gelenkaußenteils 12 weist, ausgehend von der Öffnungsseite in Richtung Anschlussseite einen öffnungsseitigen Abschnitt Ao, der sich bis zur Gelenkmittelebene EM erstreckt, und einen an den öffnungsseitigen Abschnitt Ao stetig anschließenden anschlussseitigen Abschnitt Aa. Entsprechend weist die Mittelpunktslinie A' des Gelenkinnenteils 13 ausgehend von der Öffnungsseite in Richtung Anschlussseite einen öffnungsseitigen Abschnitt Ao' und einen daran stetig anschließenden anschlussseitigen Abschnitt Aa' auf.

Die zumindest einigen Bahnpaare 22, 23 des Gleichlaufgelenks 11 sind so gestaltet, dass ein erster mittlerer Maulöffnungswinkelanstieg S1 des Maulöffnungswinkels δ über dem Beugewinkel β innerhalb des ersten Beugewinkelbereichs β1 größer ist, als ein zweiter mittlerer Maulöffnungswinkelanstieg S2 innerhalb des zweiten Beugewinkelbereichs β2. Näheres zu den Maulöffnungswinkeln wird weiter unten im Zusammenhang mit Figur 3 beschrieben.

In den Figuren 1D) bis 1G) sind weitere Details der Bahnform der äußeren Kugelbahnen 22 des Gelenkaußenteils 12, bzw. der inneren Kugelbahnen 23 des Gelenkinnenteils 13 gezeigt.

Es ist erkennbar, dass die anschlussseitigen Bahnabschnitte 22a des Gelenkaußenteils 12 jeweils zwei Segmente 22a1, 22a2 aufweisen. Ein erstes Segment 22a1 der anschlussseitigen Bahnabschnitte 22a des Gelenkaußenteils 12 erstreckt sich von der Gelenkmittelebene EM über einen Bahnwinkel β/2 von 10°, was einem Gelenkbeugewinkel von 20° entspricht. Das erste anschlussseitige Bahnsegment 22a1 hat einen einen ersten Krümmungsradius Ra1 über einen ersten Segment-Mittelpunkt Ma1. Der Krümmungsradius Ra1 ist kleiner, als der Rollkreisradius PCR, wobei das Verhältnis des Rollkreisradius PCR zum ersten Krümmungsradius Ra1 insbesondere größer als 1,4 sein kann. Der erste Segment-Mittelpunkt Ma1 liegt in der Gelenkmittelebene EM und hat von der Längsachse L12 einen radialen Abstand Or1 in Richtung der zugehörigen Kugelbahn 22. Das erste Bahnsegment 22a1 erstreckt sich über einen ersten Bahnsegmentwinkel γ1 um den ersten Segment-Mittelpunkt Ma1, wobei der Bahnsegmentwinkel γ1 insbesondere zwischen von 14° und 22° liegen kann.

An das erste Bahnsegment 22a1 schließt sich ein zweites Bahnsegment 22a2 stetig an. Die anschlussseitigen Bahnabschnitte 22a2 des Gelenkaußenteils 12 haben einen zweiten Krümmungsradius Ra2 um einen zweiten Segment-Mittelpunkt Ma2. Der zweite Krümmungsradius Ra2 ist größer als der erste Krümmungsradius Ra1, wobei das Verhältnis des Rollkreisradius PCR zum zweiten Krümmungsradius Ra2 des anschlussseitigen Bahnabschnitts 22a kleiner als 1,4 sein kann. Der Segment-Mittelpunkt Ma2 des anschlussseitigen zweiten Bahnsegments 22a2 liegt vorliegend auf der Längsachse L12 und ist gegenüber dem Gelenkmittelpunkt M axial in Richtung Öffnungsseite um einen axialen Abstand O2a versetzt, wobei auch andere Ausgestaltungen mit radialem Versatz des Kreismittelpunkts Ma denkbar sind. Das zweite Bahnsegment 22a2 erstreckt sich über einen zweiten Bahnsegmentwinkel γ2 um den zweiten Segment-Mittelpunkt Ma2, der insbesondere zwischen 12° und 20° sein kann. Wie in den Figuren 1E) und 1G) erkennbar, sind die Kugelbahnen 23 des Gelenkinnenteils 13 entsprechend gegengleich gestaltet.

Die Kugelbahnen 22, 23 des vorliegenden Gleichlaufgelenks haben demnach insgesamt zwei Krümmungsänderungen, ohne hierauf eingeschränkt zu sein. Mit Krümmungsänderung ist in diesem Zusammenhang jede Änderung der Steigung der Mittelpunktslinie A, A' im mathematischen Sinne zu verstehen.

Ein erster Krümmungsänderungspunkt P1 ist zwischen dem öffnungsseitigen Bahnabschnitt 22o und dem anschlussseitigen Bahnabschnitt 22a gebildet. Der Krümmungsänderungspunkt P1 liegt in der Gelenkmittelebene EM. Eine durch den Krümmungsänderungspunkt P1 verlaufende Tangente verläuft parallel zur Längsachse L12. Der öffnungsseitige Bahnabschnitt 22o ist vorliegend durch eine zur Längsachse L12 parallele Gerade gebildet, ohne hierauf eingeschränkt zu sein; ebenso denkbar wäre eine Ausgestaltung des öffnungsseitigen Bahnabschnitts durch einen Kreisbogen oder eine Kurve höherer Ordnung. Der zweite Krümmungsänderungspunkt P2 ist zwischen dem ersten und zweiten anschlussseitigen Bahnsegment 22a1, 22a2 gebildet.

Das Gelenkinnenteil 13 des erfindungsgemäßen Gleichlaufgelenks 11 hat eine Kugelmittelpunktslinie A', die komplementär zur Kugelmittelpunktslinie A des Gelenkaußenteils 12 gestaltet ist. Das heißt, die Kugelmittelpunktslinie A' des Gelenkinnenteils 13 ist spiegelsymmetrisch zur Kugelmittelpunktslinie A des Gelenkaußenteils 12 in Bezug auf die Gelenkmittelebene EM, beziehungsweise in Bezug auf die winkelhalbierende Ebene zwischen der Längsachse L12 des Gelenkaußenteils 12 und der Längsachse L13 des Gelenkinnenteils 13. Zur Vermeidung von Wiederholungen wird insofern hinsichtlich des Bahnverlaufs der Kugelmittelpunktslinien A' des Gelenkinnenteils 13 auf die im Zusammenhang mit der Beschreibung der Kugelbahnen 22 des Gelenkaußenteils 12 gemachten Ausführungen verwiesen.

Die Figuren 2A) bis 2C) zeigen das Gleichlaufgelenk 11 in verschiedenen Winkelpositionen, Figur 2A) bei koaxial ausgerichtetem Gelenkaußenteil 12 und Gelenkinnenteil 13, das heißt Beugewinkel ß = 0°, Figur 2B) bei einem Beugewinkel von 20° und Figur 2C) bei einem Beugewinkel von 40°. Dabei sind bei verschiedenen Beugewinkeln des Gelenks unterschiedliche Maulöffnungswinkel gebildet. Die Maulöffnungswinkel δ werden jeweils von einer an die äußere Kontaktlinie K an die jeweilige Kugel 14 angelegte äußere Kontaktlinientangente T und einer an die innere Kontaktlinie K' der besagten Kugel 14 angelegten inneren Kontaktlinientangente T' eingeschlossen.

Es ist in Figur 2A) erkennbar, dass eine an die äußere Kontaktlinie K beim Beugewinkel β von null Grad angelegte äußere zentrale Kontaktlinientangente T und eine an die innere Kontaktlinie K' angelegte innere zentrale Kontaktlinientangente T' parallel zueinander verlaufen, das heißt bei gestrecktem Gelenk ist der Maulöffnungswinkel δ0 null Grad. Es ist jedoch auch möglich, dass der Maulöffnungswinkel δ bei gestrecktem Gelenk auch größer null ist, beispielsweise zwischen null und acht Grad. Durch einen kleinen Maulöffnungswinkel δ0 bei gestrecktem Gelenk wirken nur geringe Axialkräfte von den Kugelbahnen 22, 23 auf die Kugeln 14, was sich reibungsmindernd für das Gelenk auswirkt.

Des Weiteren ist in den Figuren 2B) und 2C) erkennbar, dass die äußeren und inneren Kugelbahnen 22, 23 so gestaltet sind, dass sich in der Gelenkbeugeebene sowohl an der ausgehend von der Gelenkmittelebene EM in Richtung Öffnungsseite wandernden Kugel 14o (untere Bildhälfte), als auch an der ausgehend von der Gelenkmittelebene EM in Richtung Anschlussseite wandernden Kugel 14a (obere Bildhälfte) Maulöffnungswinkel δ erzeugt werden, die sich in dieselbe axiale Richtung öffnen. Das heißt, dass die durch die Maulöffnungswinkel δ von den Kugelbahnen 22, 23 auf die Kugeln 14 wirkenden resultierenden Axialkräfte somit in dieselbe axiale Richtung wirken.

Ein erster Beugewinkelbereich ist vorliegend so definiert, dass er Beugewinkel von bis zu plus minus zwanzig Grad (β = 0° ± 20°) um die Gelenkmittelebene EM umfasst, das heißt einen Beugewinkelbereich β1 von -20° bis +20° umfasst (-20° < β1 < 20°). Ein daran anschließender zweiter Beugewinkelbereich β2 umfasst Beugewinkel β, die betragsmäßig größer sind als zwanzig Grad, das heißt Beugewinkel β, die größer sind als 20° und solche, die kleiner sind als -20° (β < -20° oder β > 20°).

Für einen Beugewinkel ß von 20° (Figur 2B) ist an der in der Gelenkbeugeebene in Richtung Öffnungsseite wandernden Kugel 14o zwischen der äu ßeren Tangente T20o und der inneren Tangente T20o' ist ein erster Maulöffnungswinkel δ20o gebildet, der bei der vorliegenden Ausführungsform insbesondere etwa 20° beträgt, während an der in der Gelenkbeugeebene in Richtung Anschlussseite wandernden Kugel 14a zwischen der äußeren Tangente T20a und der inneren Tangente T20a' ein zweiter Maulöffnungswinkel δ20a anliegt, der insbesondere etwa 10° beträgt.

Bei einem größeren Beugewinkel ß von 40° (Figur 2C) sind die Maulöffnungswinkel δ40ο, δ40a an der öffnungsseitigen und anschlussseitigen Kugel 14o, 14a bei der vorliegenden Ausführungsform jeweils größer als beim Beugewinkel von 20°. Dabei beträgt der Maulöffnungswinkel δ40o an der öffnungsseitigen Kugel 14o insbesondere etwa 40°, während der Maulöffnungswinkel δ40a an der anschlussseitigen Kugel 14a insbesondere etwa 20° beträgt.

Es versteht sich, dass die genannten Maulöffnungswinkel δ zu den genannten Beugewinkeln ß beispielhaft sind und von der gewählten Bahnform abhängen.

Nachstehend werden mögliche Ausgestaltungen der Bahnpaare 22, 23 anhand des Diagramms gemäß Figur 3 erläutert, das Maulöffnungswinkel δ (in Winkelgrad) über dem Beugewinkel ß (in Winkelgrad) zeigt. Dabei sind die Maulöffnungswinkel δ für die Kugeln 14, die sich bei Abwinklung des Gelenks zur Anschlussseite des Gelenkaußenteils 12 bewegen, über den negativen Beugewinkeln ß angetragen. Dementsprechend sind die Maulöffnungswinkel δ für die Kugeln 14, die sich bei Abwinklung des Gelenks zur Öffnungsseite des Gelenkaußenteils 12 bewegen, über den positiven Beugewinkeln ß angetragen. Die untere gepunktete Linie im Winkelbereich für den Beugewinkel ß zwischen null und 50° gibt im Wesentlichen die erfindungsgemäße Ausgestaltung der Bahnpaare gemäß den Figuren 1 bis 2 wieder. Die obere gepunktete Linie für den Beugewinkel ß zwischen null und 50° stellt eine beispielhafte obere Grenzlinie für erfindungsgemäße Verläufe von Maulöffnungswinkeln δ dar. Zwischen der unteren und oberen gepunkteten Linie ist für die Kugeln 14, die sich bei Abwinklung des Gelenks zur Anschlussseite des Gelenkaußenteils 12 bewegen, eine weitere beispielhafte Ausgestaltung mit durchgezogener Linie dargestellt.

Allen Darstellungen ist gemein, dass der Maulöffnungswinkel δ bei gestrecktem Gelenk (β = 0°) null beträgt (δ = 0°). Für die Bahnpaare gemäß der unteren gepunkteten Linie gilt, dass der erste mittlere Maulöffnungswinkelanstieg S1 für das erste anschlussseitige Bahnsegment 22a1, 23a1 gleich 0,5 ist, das heißt bei einem Beugewinkel β = -10° beträgt der Maulöffnungswinkel δ gleich 5° und bei einem Beugewinkel β = -20° beträgt der Maulöffnungswinkel δ gleich 10°. Vorzugsweise nimmt der Maulöffnungswinkel δ innerhalb des ersten anschlussseitige Bahnsegment 22a1, 23a1 um mindestens zehn Grad zu (δ20 - δ0 ≥ 10°). Im zweiten anschlussseitigen Bahnsegment 22a1, 23a1, das heißt ab einem Beugewinkel größer 20°, bleibt der Maulöffnungswinkel δ bei der unteren gepunkteten Ausführung konstant bei 10°, das heißt die Steigung des Maulöffnungswinkels S2 ist null.

Beliebig andere Ausgestaltungen der anschlussseitigen Abschnitte 22a, 23a der Bahnpaare 22, 23 sind denkbar, die zu einem Verlauf des Maulöffnungswinkels δ über dem Beugewinkel β zwischen den beiden gepunkteten Linien führen. Beispielsweise kann der erste mittlere Maulöffnungswinkelanstieg S1 für Beugewinkel bis betragsmäßig 15° innerhalb das ersten anschlussseitigen Bahnsegment 22a1, 23a1 gleich 2,0 sein, das heißt bei einem Beugewinkel β = -10° beträgt der Maulöffnungswinkel δ gleich 20° und bei einem Beugewinkel β = -15° beträgt der Maulöffnungswinkel δ gleich 30° (obere gestrichelte Linie). Im zweiten anschlussseitigen Bahnsegment 22a1, 23a1 kann der Maulöffnungswinkel δ weiter steigen, allerdings mit geringerer Steigungsrate S2 von beispielsweise kleiner 0,5.

Die öffnungsseitigen Abschnitte 22o, 23o der Bahnpaare 22, 23 sind bei der vorliegenden Ausführung so gestaltet, dass der Maulöffnungswinkel δ bei zunehmendem Beugewinkel β des Gelenks konstant zunimmt. Das heißt bei einem Beugewinkel β = 10° beträgt der Maulöffnungswinkel δ gleich 10°, bei einem Beugewinkel β = 20° beträgt der Maulöffnungswinkel δ gleich 20°, und so weiter (gestrichelte Linie). Durch diese Ausgestaltung ergibt sich, dass für jeden Beugewinkel β innerhalb des ersten Beugewinkelbereichs ein öffnungsseitiger Maulöffnungswinkel δo einer sich in der Gelenkbeugeebene EB zur Öffnungsseite des Gelenkaußenteils 12 bewegenden Kugel 14 und ein anschlussseitiger Maulöffnungswinkel δa einer sich bei demselben Beugewinkel β in der Gelenkbeugeebene EB zur Anschlussseite des Gelenkaußenteils 12 bewegenden Kugel 14 sich in dieselbe axiale Richtung öffnen.

Insgesamt ergibt sich bei den Gleichlaufgelenken, dass der Maulöffnungswinkel δ innerhalb des zentralen Beugewinkelbereichs von bis zu zwanzig Grad um die Gelenkmittelebene EM relativ stark ansteigt, so dass hier eine zuverlässige Käfigsteuerung des Kugelkäfigs 15 gewährleistet ist. Dadurch, dass der Anstieg des Maulöffnungswinkels δ bei größeren Beugewinkeln β von mehr als zwanzig Grad jedoch wieder abnimmt und insbesondere kleiner ist, als im zentralen Beugewinkelbereich, bleiben die Kugeln 14 auch bei diesen großen Beugewinkeln β im Gelenkinnenteil 13 zuverlässig geführt und treten nur geringfügig axial aus den Kugelbahnen 23 des Gelenkinnenteils 13 heraus.

### Bezugszeichenliste

- 11: Gleichlaufgelenk
- 12: Gelenkaußenteil
- 13: Gelenkinnenteil
- 14: Kugel
- 15: Kugelkäfig
- 16: äußere Kugelfläche
- 17: innere Kugelfläche
- 18: Fenster
- 19: Anschlussseite
- 20: Öffnungsseite
- 21: Öffnung
- 22: äußere Kugelbahn
- 22a, 22o: Bahnabschnitte
- 23: innere Kugelbahn
- 23a, 23o: Bahnabschnitte
- 24: Zapfen
- 25: Antriebswelle

- A, A': Mittelpunktslinie
- Aa, Ao: Mittelpunktslinien
- R: Radius
- M: Gelenkmittelpunkt
- EM: Gelenkmittelebene
- T, T': Tangente
- β: Gelenkbeugewinkel
- δ: Maulöffnungswinkel

## Patentansprüche

1. Gleichlaufgelenk, umfassend:
ein Gelenkaußenteil (12) mit einer Längsachse (L12) und äußeren Kugelbahnen (22), wobei das Gelenkaußenteil (12) eine Anschlussseite und eine Öffnungsseite hat,
ein Gelenkinnenteil (13) mit einer Längsachse (L13) und inneren Kugelbahnen (23),
wobei jeweils eine äußere Kugelbahn (22) und eine innere Kugelbahn (23) ein Bahnpaar (22, 23) miteinander bilden,
jeweils eine drehmomentübertragende Kugel (14) in jedem Bahnpaar (22, 23), einen Kugelkäfig (15), der zwischen dem Gelenkaußenteil (12) und dem Gelenkinnenteil (13) angeordnet ist und umfangsverteilte Käfigfenster (18) aufweist, die jeweils zumindest eine der drehmomentübertragenden Kugeln (14) aufnehmen,
wobei die Kugeln (14) vom Kugelkäfig (15) bei koaxial ausgerichteten Längsachsen (L12, L13) des Gelenkinnenteils (13) und des Gelenkaußenteils (12) eine Gelenkmittelebene (EM) definieren, wobei die beiden Längsachsen (L12, L13) bei von null Grad (0°) abweichenden Beugewinkeln (ß) eine Gelenkbeugeebene (EB) aufspannen;
wobei, in der Gelenkbeugeebene (EB) betrachtet, in jeder Winkelstellung des Gleichlaufgelenks (11) ein Maulöffnungswinkel (δ) gebildet ist zwischen einer äußeren Tangente (T), die in einem äußeren Kontaktpunkt zwischen äußerer Kugelbahn (22) und Kugel (14) an die äußere Kugelbahn (22) angelegt ist, und einer inneren Tangente (T'), die in einem inneren Kontaktpunkt zwischen innerer Kugelbahn (23) und Kugel (14) an die innere Kugelbahn (23) angelegt ist, wobei die Mittelpunkte der Kugeln (14) beim Bewegen entlang der äußeren und inneren Kugelbahnen (22, 23) jeweils eine Mittelpunktslinie (A, A') definieren, wobei ferner ein erster Beugewinkelbereich definiert ist, der Beugewinkel (β) kleiner als zwanzig Grad umfasst (-20°< β < 20°), und wobei ein zweiter Beugewinkelbereich definiert ist, der Beugewinkel (β) größer als zwanzig Grad umfasst (β < -20° und β > 20°),
wobei zumindest einige der Bahnpaare (22, 23) derart gestaltet sind, dass:
- ein anschlussseitiger Maulöffnungswinkel (δa) einer sich in der Gelenkbeugeebene (EB) zur Anschlussseite des Gelenkaußenteils (12) bewegenden Kugel (14) innerhalb des ersten Beugewinkelbereichs mit zunehmendem Beugewinkel (β) zunimmt, wobei ein anschlussseitiger erster mittlerer Maulöffnungswinkelanstieg (S1) des anschlussseitigen Maulöffnungswinkels (δa) über dem Beugewinkel (β) innerhalb des ersten Beugewinkelbereichs definiert ist,
- wobei der anschlussseitige erste mittlere Maulöffnungswinkelanstieg (S1) des ersten Beugewinkelbereichs größer ist, als ein anschlussseitiger zweiter mittlerer Maulöffnungswinkelanstieg (S2) des zweiten Beugewinkelbereichs.

2. Gleichlaufgelenk nach Anspruch 1,
**dadurch gekennzeichnet,**
**dass** der anschlussseitige erste mittlere Maulöffnungswinkelanstieg (S1) größer als 0,5 ist
und/oder
**dass** der anschlussseitige zweite mittlere Maulöffnungswinkelanstieg (S2) kleiner als 0,5 ist.

3. Gleichlaufgelenk nach Anspruch 1 oder 2,
**dadurch gekennzeichnet,**
**dass** die zumindest einigen Bahnpaare (22, 23) derart gestaltet sind, dass:
- bei einem Beugewinkel von null Grad (β = 0°) der Maulöffnungswinkel (δ) mindestens null Grad (δ ≥ 0°) und/oder kleiner als acht Grad ist (δ < 8°), insbesondere kleiner als vier Grad ist (δ < 4°).

4. Gleichlaufgelenk nach einem der Ansprüche 1 bis 3,
**dadurch gekennzeichnet,**
**dass** die zumindest einigen Bahnpaare (22, 23) derart gestaltet sind, dass der anschlussseitige Maulöffnungswinkel (δa) über dem Beugewinkel (β) innerhalb des zweiten Beugewinkelbereichs variabel ist.

5. Gleichlaufgelenk nach einem der Ansprüche 1 bis 4,
**dadurch gekennzeichnet,**
**dass** die zumindest einigen Bahnpaare (22, 23) derart gestaltet sind, dass für jeden Beugewinkel (β) innerhalb des zweiten Beugewinkelbereichs gilt, dass ein öffnungsseitiger Maulöffnungswinkel (δo) einer sich in der Gelenkbeugeebene (EB) zur Öffnungsseite des Gelenkaußenteils (12) bewegenden Kugel (14) und ein anschlussseitiger Maulöffnungswinkel (δa) einer sich bei demselben Beugewinkel (β) in der Gelenkbeugeebene (EB) zur Anschlussseite des Gelenkaußenteils (12) bewegenden Kugel (14) sich in dieselbe axiale Richtung öffnen.

6. Gleichlaufgelenk nach einem der Ansprüche 1 bis 5,
**dadurch gekennzeichnet,**
**dass** die Kugelbahnen (22) des Gelenkaußenteils (12) über ihre Länge jeweils einen öffnungsseitigen Bahnabschnitt (22o) und einen anschlussseitigen Bahnabschnitt (22a) aufweisen,
wobei die anschlussseitigen Bahnabschnitte (22a) der Kugelbahnen (22) des Gelenkaußenteils (12) jeweils zumindest zwei Segmente (22a1, 22a2) mit unterschiedlicher Krümmung aufweisen.

7. Gleichlaufgelenk nach Anspruch 6,
**dadurch gekennzeichnet,**
**dass** ein erstes Segment (22a1) der anschlussseitigen Bahnabschnitte (22a) des Gelenkaußenteils (12) einen ersten Krümmungsradius (Ra1) aufweist, wobei das Verhältnis eines Rollkreisradius (PCR) zum ersten Krümmungsradius (Ra1) des anschlussseitigen Bahnabschnitts (22a) größer ist als 1,4.

8. Gleichlaufgelenk nach Anspruch 7,
**dadurch gekennzeichnet,**
**dass** der erste Krümmungsradius (Ra1) des ersten Segments (22a1) durch einen ersten Kreisbogenabschnitt um einen ersten Segment-Mittelpunkt (Ma1) gebildet ist, wobei der erste Segment-Mittelpunkt (Ma1) in der Gelenkmittelebene (EM) liegt und von der Längsachse (L12) einen radialen Abstand (Offset) in Richtung der Kugelbahn (22) aufweist.

9. Gleichlaufgelenk nach einem der Ansprüche 6 bis 8,
**dadurch gekennzeichnet,**
**dass** ein zweites Segment (22a2) der anschlussseitigen Bahnabschnitte (22a) des Gelenkaußenteils (12) einen zweiten Krümmungsradius (Ra2) aufweist, wobei das Verhältnis des Rollkreisradius (PCR) zum zweiten Krümmungsradius (Ra2) des anschlussseitigen Bahnabschnitts (22a) kleiner ist als 1,4.

10. Gleichlaufgelenk nach Anspruch 9,
**dadurch gekennzeichnet,**
**dass** der zweite Krümmungsradius (Ra2) des zweiten Segments (22a2) durch einen zweiten Kreisbogenabschnitt um einen zweiten Segment-Mittelpunkt (Ma2) gebildet ist, wobei der zweite Segment-Mittelpunkt (Ma2) einen axialen Abstand (Offset) von der Gelenkmittelebene (EM) in Richtung Öffnungsseite aufweist.

11. Gleichlaufgelenk nach einem der Ansprüche 1 bis 10,
**dadurch gekennzeichnet,**
**dass** der Kugelkäfig (15) eine sphärische Außenfläche (16) zum Führen des Kugelkäfigs (15) gegenüber einer inneren Fläche des Gelenkaußenteils (12) und eine sphärische Innenfläche (17) zum Führen des Kugelkäfigs (15) gegenüber einer äußeren Fläche des Gelenkinnenteils (13) aufweist,
wobei zwischen einem Mittelpunkt der sphärischen Außenfläche (16) und einem Mittelpunkt der sphärischen Innenfläche (17) ein axialer Versatz (Offset) vorgesehen ist.

12. Gleichlaufgelenk nach einem der Ansprüche 1 bis 11,
**dadurch gekennzeichnet,**
**dass** ein Schmiermittel zum Schmieren des Gleichlaufgelenks (11) vorgesehen ist, wobei das Schmiermittel einen Reibwert (µ) zwischen 0,02 und 0,09 (0,02 < µ < 0,09), insbesondere zwischen 0,05 und 0,06 (0,05 < µ < 0,06), aufweist.

13. Gleichlaufgelenk nach einem der Ansprüche 1 bis 12,
**dadurch gekennzeichnet,**
**dass** die zumindest einigen Bahnpaare (22, 23) derart gestaltet sind, dass sich der erste Kreisbogenabschnitt über einen ersten Bahnsegmentwinkel (γ1) von 14°bis 22° (14° < γ1 < 22°) um den ersten Segment-Mittelpunkt (Ma1) erstreckt, und/oder
**dass** sich der zweite Kreisbogenabschnitt über einen zweiten Bahnsegmentwinkel (γ2) von 12° bis 20° (12° < y2 < 20°) um den zweiten Segment-Mittelpunkt (Ma2) erstreckt.

14. Gleichlaufgelenk nach einem der Ansprüche 1 bis 13,
**dadurch gekennzeichnet,**
**dass** für die zumindest einigen Bahnpaare (22, 23) zumindest eines von Folgendem gilt:
das Verhältnis zwischen Rollkreisradius (PCR) und Kugeldurchmesser (D14) beträgt zwischen 1,4 und 2,1;
das Verhältnis zwischen Rollkreisradius (PCR) und axialem Versatz (Offset) des Kugelkäfigs (15) beträgt zwischen 5,0 und 12,5;
das Verhältnis zwischen Rollkreisradius (PCR) und axialem Versatz (Offset) des zweiten Bahnsegment-Mittelpunkts (Ma2) beträgt zwischen 4,0 und 8,0;
das Verhältnis zwischen Rollkreisradius (PCR) und Durchmesser (D13i) eines Anschlussprofils des Gelenkinnenteils (13) beträgt zwischen 1,0 und 1,25;
das Verhältnis zwischen Rollkreisradius (PCR) und Außendurchmesser (D12o) des Gelenkaußenteils (12) beträgt zwischen 0,315 und 0,345.

## Claims

1. Constant velocity joint, comprising:
an outer joint part (12) with a longitudinal axis (L12) and outer ball tracks (22), wherein the outer joint part (12) has an attachment side and an opening side, an inner joint part (13) with a longitudinal axis (L13) and inner ball tracks (23), wherein respectively an outer ball track (22) and an inner ball track (23) form a pair of tracks (22, 23) with each other,
a torque-transmitting ball (14) in each pair of tracks (22, 23),
a ball cage (15) which is arranged between the outer joint part (12) and the inner part (13) and comprises circumferentially distributed cage windows (18) which each receive at least one of the torque-transmitting balls (14),
wherein the balls (14) define a joint center plane (EM) by the ball cage (15) when the longitudinal axes (L12, L13) of the inner joint part (13) and the outer joint part (12) are coaxially aligned, wherein the two longitudinal axes (L12, L13) define a joint articulation plane (EB) at articulation angles (β) other than zero degrees (0°);
wherein, viewed in the joint articulation plane (EB), in any angular position of the constant velocity joint (11) an opening angle (δ) is formed between an outer tangent (T), which is applied to the outer ball track (22) in an outer contact point between the outer ball track (22) and the ball (14), and an inner tangent (T'), which is applied to the inner ball track (23) in an inner contact point between the inner ball track (23) and the ball (14),
wherein the centers of the balls (14) each define a center point line (A, A') when moving along the outer and inner ball tracks (22, 23), wherein, furthermore, a first articulation angle range is defined comprising articulation angles (β) less than twenty degrees (-20° < β < 20°), and wherein a second articulation angle range is defined comprising articulation angles (β) greater than twenty degrees (β < -20° and β > 20°),
wherein at least some of the pairs of tracks (22, 23) are configured such that:
- an attachment-sided opening angle (δa) of a ball (14) moving in the joint articulation plane (EB) towards the attachment side of the outer joint part (12) increases within the first articulation angle range with increasing articulation angle (β), wherein an attachment-sided first mean opening angle increase (S1) of the attachment-sided opening angle (δa) is defined over the articulation angle (β) within the first articulation angle range,
- wherein the attachment-sided first mean opening angle increase (S1) of the first articulation angle range is greater than an attachment-sided second mean opening angle increase (S2) of the second articulation angle range.

2. Constant velocity joint according to claim 1,
**characterised**
**in that** the attachment-sided first mean opening angle increase (S1) is greater than 0.5,
and/or
**in that** the attachment-sided second mean opening angle increase (S2) is less than 0.5.

3. Constant velocity joint according to claim 1 or 2,
**characterised**
**in that** the at least some of the pairs of tracks (22, 23) are configured such that:
- at an articulation angle of zero degrees (β = 0°) the opening angle (δ) is at least zero degrees (δ ≥ 0°) and/or less than eight degrees (δ < 8°), in particular less than four degrees (δ < 4°).

4. Constant velocity joint according to any one of claims 1 to 3,
**characterised**
**in that** the at least some of the pairs of tracks (22, 23) are configured such that the attachment-sided opening angle (δa) is variable over the articulation angle (β) within the second articulation angle range.

5. Constant velocity joint according to any one of claims 1 to 4,
**characterised**
**in that** the at least some of the pairs of tracks (22, 23) are configured such that for any articulation angle (β) within the second articulation angle range it applies, that an opening-sided opening angle (5o) of a ball (14) moving in the joint articulation plane (EB) towards the opening side of the outer joint part (12) and an attachment-sided opening angle (δa) of a ball (14) moving at the same articulation angle (β) in the joint articulation plane (EB) towards the attachment side of the outer joint part (12) open in the same axial direction.

6. Constant velocity joint according to any one of claims 1 to 5,
**characterised**
**in that** the ball tracks (22) of the outer joint part (12) each comprise, over their length, an opening-sided track section (22o) and an attachment-sided track section (22a),
wherein the attachment-sided track sections (22a) of the ball tracks (22) of the outer joint part (12) each have at least two segments (22a1, 22a2) with different curvature.

7. Constant velocity joint according to claim 6,
**characterised**
**in that** a first segment (22a1) of the attachment-sided track sections (22a) of the outer joint part (12) has a first radius of curvature (Ra1),
wherein the ratio of a pitch circle radius (PCR) to the first radius of curvature (Ra1) of the attachment-sided track section (22a) is greater than 1.4.

8. Constant velocity joint according to claim 7,
**characterised**
**in that** the first radius of curvature (Ra1) of the first segment (22a1) is formed by a first circular arc section around a first segment center (Ma1), wherein the first segment center (Ma1) is arranged in the joint center plane (EM) and comprises a radial offset from the longitudinal axis (L12) in direction towards the ball track (22).

9. Constant velocity joint according to any one of claims 6 to 8,
**characterised**
**in that** a second segment (22a2) of the attachment-sided track sections (22a) of the outer joint part (12) has a second radius of curvature (Ra2), wherein the ratio of the pitch circle radius (PCR) to the second radius of curvature (Ra2) of the attachment-sided track section (22a) is smaller than 1.4.

10. Constant velocity joint according to claim 9,
**characterised**
**in that** the second radius of curvature (Ra2) of the second segment (22a2) is formed by a second circular arc section around a second segment center (Ma2), wherein the second segment center (Ma2) comprises an axial offset from the joint center plane (EM) in direction towards the opening side.

11. Constant velocity joint according to any one of claims 1 to 10,
**characterised**
**in that** the ball cage (15) has a spherical outer face (16) for guiding the ball cage (15) with respect to an inner face of the outer joint part (12) and a spherical inner face (17) for guiding the ball cage (15) with respect to an outer face of the inner joint part (13),
wherein an axial offset is provided between a center of the spherical outer face (16) and a center of the spherical inner face (17).

12. Constant velocity joint according to any one of claims 1 to 11,
**characterised**
**in that** a lubricant is provided for lubricating the constant velocity joint (11), wherein the lubricant has a coefficient of friction (µ) between 0.02 and 0.09 (0.02 < µ < 0.09), in particular between 0.05 and 0.06 (0.05 < µ < 0.06).

13. Constant velocity joint according to any one of claims 1 to 12,
**characterised**
**in that** the at least some pairs of tracks (22, 23) are configured such that the first circular arc section extends over a first track segment angle (γ1) of 14° to 22° (14° < γ1 < 22°) around the first segment center (Ma1), and/or
**in that** the second circular arc section extends over a second track segment angle (γ2) of 12° to 20° (12° < γ2 < 20°) around the second segment center (Ma2).

14. Constant velocity joint according to any one of claims 1 to 13,
**characterised**
**in that** at least one of the following applies to the at least some of the pairs of tracks (22, 23):
the ratio between pitch circle radius (PCR) and ball diameter (D14) is between 1.4 and 2.1;
the ratio between pitch circle radius (PCR) and axial offset of the ball cage (15) is between 5.0 and 12.5;
the ratio between pitch circle radius (PCR) and axial offset of the second track segment center (Ma2) is between 4.0 and 8.0;
the ratio between the pitch circle radius (PCR) and the diameter (D13i) of a connecting profile of the inner joint part (13) is between 1.0 and 1.25;
the ratio between the pitch circle radius (PCR) and the outer diameter (D12o) of the outer joint part (12) is between 0.315 and 0.345.

## Revendications

1. Joint homocinétique, comprenant :
une partie extérieure de joint (12) avec un axe longitudinal (L12) et des gorges à billes extérieures (22), dans lequel la partie extérieure de joint (12) présente un côté raccordement et un côté ouverture,
une partie intérieure de joint (13) avec un axe longitudinal (L13) et des gorges à billes intérieures (23),
dans lequel respectivement une gorge à billes extérieure (22) et une gorge à billes intérieure (23) forment ensemble une paire de gorges (22, 23),
présente respectivement une bille (14) de transmission de couple de rotation dans chaque paire de gorges (22, 23), une cage à billes (15) qui est disposée entre la partie extérieure de joint (12) et la partie intérieure de joint (13) et des fenêtres de cage (18) réparties sur le pourtour qui reçoivent respectivement au moins une des billes (14) de transmission de couple de rotation,
dans lequel les billes (14) de la cage à billes (15) définissent un plan médian de joint (EM) lorsque les axes longitudinaux (L12, L13) de la partie intérieure de joint (13) et de la partie extérieure de joint (12) sont alignés coaxialement, dans lequel les deux axes longitudinaux (L12, L13) étendent un plan de flexion de joint (EB) avec des angles de flexion (β) s'écartant de zéro degré (0°);
dans lequel, vu dans le plan de flexion de joint (EB), dans chaque position d'angle du joint homocinétique (11), un angle d'ouverture de mâchoire (δ) est formé entre une tangente extérieure (T) qui est placée contre la gorge à billes extérieure (22) dans un point de contact extérieur entre la gorge à billes extérieure (22) et la bille (14), et une tangente intérieure (T') qui est placée contre la gorge à billes intérieure (23) dans un point de contact intérieur entre la gorge à billes intérieure (23) et la bille (14),
dans lequel les points médians des billes (14) définissent respectivement une ligne de point médian (A, A') lors du déplacement le long des gorges à billes extérieure et intérieure (22, 23), dans lequel en outre, une première zone d'angles de flexion est définie qui contient des angles de flexion (β) inférieurs à vingt degrés (-20° < β < 20°) et dans lequel une seconde zone d'angles de flexion est définie qui présente des angles de flexion (β) supérieurs à vingt degrés (β < -20° et β > 20°),
dans lequel au moins quelques-unes des paires de gorges (22, 23) sont ainsi formées que :
- un angle d'ouverture de mâchoire (δa) côté raccordement d'une bille (14) se déplaçant vers le côté raccordement de la partie extérieure de joint (12) dans le plan de flexion de joint (EB) augmente dans la première zone d'angles de flexion à mesure que l'angle de flexion (β) augmente, dans lequel une première augmentation moyenne d'angle d'ouverture de mâchoire (S1) côté raccordement de l'angle d'ouverture de mâchoire (δa) côté raccordement est définie par l'angle de flexion (β) à l'intérieur de la première zone d'angles de flexion,
- dans lequel la première augmentation moyenne d'angle d'ouverture de mâchoire (S1) côté raccordement de la première zone d'angles de flexion est plus grande qu'une seconde augmentation moyenne d'angle d'ouverture de mâchoire (S2) côté raccordement de la seconde zone d'angles de flexion.

2. Joint homocinétique selon la revendication 1, **caractérisé en ce que** la première augmentation moyenne d'angle d'ouverture de mâchoire (S1) côté raccordement est supérieure à 0,5,
et/ou
que la seconde augmentation moyenne d'angle d'ouverture de mâchoire (S2) côté raccordement est inférieure à 0,5.

3. Joint homocinétique selon la revendication 1 ou 2, **caractérisé en ce que**
les au moins quelques-unes paires de gorges (22, 23) sont ainsi conçues que
- pour un angle de flexion de zéro degré (β = 0°), l'angle d'ouverture de mâchoire (δ) fait au moins zéro degré (δ ≥ 0°) et/ou est inférieur à huit degrés (δ < 8°), en particulier inférieur à quatre degrés ( δ < 4°).

4. Joint homocinétique selon l'une des revendications 1 à 3,
**caractérisé en ce que**
les au moins quelques-unes paires de gorges (22, 23) sont formées de façon à ce que l'angle d'ouverture de mâchoire (δa) côté raccordement soit variable à l'intérieur de la seconde zone d'angles de flexion par l'angle de flexion (β).

5. Joint homocinétique selon l'une des revendications 1 à 4,
**caractérisé en ce que** les au moins quelques-unes paires de gorges (22, 23) sont formées de façon à ce que pour chaque angle de flexion (β) à l'intérieur de la seconde zone d'angles de flexion vaut qu'un angle d'ouverture de mâchoire (5o) côté ouverture d'une bille (14) se déplaçant dans le plan de flexion de joint (EB) vers le côté ouverture de la partie extérieure de joint (12) et un angle d'ouverture de mâchoire (δa) côté raccordement d'une bille (14) se déplaçant dans le plan de flexion de joint (EB) avec le même angle de flexion (β) vers le côté raccordement de la partie extérieure de joint (12), s'ouvrent dans le même sens axial.

6. Joint homocinétique selon l'une des revendications 1 à 5,
**caractérisé en ce que** les gorges à billes (22) de la partie extérieure de joint (12) présentent sur leur longueur respectivement un tronçon de gorge (22o) côté ouverture et un tronçon de gorge (22a) côté raccordement,
dans lequel les tronçons de gorge (22a) côté raccordement des gorges à billes (22) de la partie extérieure de joint (12) présentent respectivement au moins deux segments (22a1, 22a2) avec une courbure différente.

7. Joint homocinétique selon la revendication 6, **caractérisé en ce qu'**un premier segment (22a1) des tronçons de gorge (22a) côté raccordement de la partie extérieure de joint (12) présente un premier rayon de courbure (Ra1),
dans lequel le rapport d'un rayon de cercle roulant (PCR) au premier rayon de courbure (Ra1) du tronçon de gorge (22a) côté raccordement est supérieur à 1,4.

8. Joint homocinétique selon la revendication 7, **caractérisé en ce que** le premier rayon de courbure (Ra1) du premier segment (22a1) est formé par un premier tronçon d'arc de cercle sur un premier point médian de segment (Ma1), dans lequel le premier point médian de segment (Ma1) est situé dans le plan médian de joint (EM) et présente, depuis l'axe longitudinal (L12), un écart radial (décalage) en direction de la gorge à billes (22).

9. Joint homocinétique selon l'une des revendications 6 à 8,
**caractérisé en ce qu'**un second segment (22a2) des tronçons de gorge (22a) côté raccordement de la partie extérieure de joint (12) présente un second rayon de courbure (Ra2), dans lequel le rapport du rayon de cercle roulant (PCR) au second rayon de courbure (Ra2) du tronçon de gorge (22a) côté raccordement est inférieur à 1,4.

10. Joint homocinétique selon la revendication 9, **caractérisé en ce que** le second rayon de courbure (Ra2) du second segment (22a2) est formé par un second d'arc de cercle autour d'un second point médian de segment (Ma2), dans lequel le second point médian de segment (Ma2) présente un écart axial (offset) du plan médian de joint (EM) en direction du côté ouverture.

11. Joint homocinétique selon l'une des revendications 1 à 10,
**caractérisé en ce que** la cage à billes (15) présente une surface extérieure sphérique (16) pour guider la cage à billes (15) par rapport à une surface intérieure de la partie extérieure de joint (12) et une surface intérieure sphérique (17) pour guider la cage à billes (15) par rapport à une surface extérieure de la partie intérieure de joint (13),
dans lequel entre un point médian de la surface extérieure sphérique (16) et un point médian de la surface intérieure sphérique (17), un décalage axial (offset) est prévu.

12. Joint homocinétique selon l'une des revendications 1 à 11,
**caractérisé en ce qu'**un lubrifiant pour lubrifier le joint homocinétique (11) est prévu, dans lequel le lubrifiant présente un coefficient de frottement (µ) entre 0,02 et 0,09 (0,02 < µ < 0,09), en particulier entre 0,05 et 0,06 (0,05 < µ < 0,06).

13. Joint homocinétique selon l'une des revendications 1 à 12,
**caractérisé en ce que** les au moins quelques-unes paires de gorges (22, 23) sont formées de façon à ce que le premier tronçon d'arc de cercle s'étende sur un premier angle de segment de gorge (γ1) de 14° à 22° (14° < γ1 < 22°) autour du premier point médian de segment (Ma1), et/ou
que le second segment d'arc de cercle s'étende sur un second angle de segment de gorge (γ2) de 12° à 20° (12° < γ2 < 20°) autour du second point médian de segment (Ma2) .

14. Joint homocinétique selon l'une des revendications 1 à 13,
**caractérisé en ce que** pour les au moins quelques-unes paires de gorges (22, 23) vaut au moins un de ce qui suit :
le rapport entre le rayon de cercle roulant (PCR) et le diamètre de bille (D14) fait entre 1,4 et 2,1 ;
le rapport entre le rayon de cercle roulant (PCR) et le décalage axial (offset) de la cage à billes (15) fait entre 5,0 et 12,5 ;
le rapport entre le rayon de cercle roulant (PCR) et le décalage axial (offset) du second point médian de segment (Ma2) fait entre 4,0 et 8,0 ;
le rapport entre le rayon de cercle roulant (PCR) et le diamètre (D13i) d'un profilé de raccordement de la partie intérieure de joint (13) fait entre 1,0 et 1,25 ;
le rapport entre le rayon de cercle roulant (PCR) et le diamètre extérieur (D12o) de la partie extérieure de joint (12) fait entre 0,315 et 0,345.
